Europäisches Patentamt

European Patent Office

Office européen des brevets

(19)

(11) Veröffentlichungsnummer: **0 190 463**

**B1**

(12) EUROPÄISCHE PATENTSCHRIFT

(45) Veröffentlichungstag der Patentschrift: **11.04.90**

(21) Anmeldenummer: **85116634.8**

(22) Anmeldetag: **28.12.85**

(51) Int. Cl.⁵: **F 23 J 7/00, B 01 D 53/34**

(54) **Verfahren und Vorrichtung zum Reduzieren der Schadstoffemission von Feuerungsanlagen.**

(30) Priorität: **28.01.85 DE 3502788**

(43) Veröffentlichungstag der Anmeldung:
**13.08.86 Patentblatt 86/33**

(45) Bekanntmachung des Hinweises auf die
Patenterteilung:
**11.04.90 Patentblatt 90/15**

(84) Benannte Vertragsstaaten:
**AT BE CH DE FR GB IT LI LU NL**

(56) Entgegenhaltungen:
**DE-A-3 324 668       US-A-4 115 515**
**FR-A-2 290 243       US-A-4 335 084**
**FR-A-2 317 000**

**PATENT ABSTRACTS OF JAPAN, Band 1, Nr. 36,
16. April 1977, Seite 2325 M 76; & JP-A-51 145
029 (SHIN NIPPON SEITETSU KAGAKU KOGYO
K.K.) 13-12-1977**

**PATENT ABSTRACTS OF JAPAN, Band 6, Nr.
120 (M-140)998r, 3. Juli 1982; & JP-A-57 47 108
(SANREE REINETSU K.K.) 17-03-1982**

(73) Patentinhaber: **Saacke GmbH & Co. KG
Südweststr. 13
D-2800 Bremen 21 (DE)**

(72) Erfinder: **Haubold, Klaus, Dipl.-Ing.
Mühlenstrasse 21
D-2820 Bremen 71 (DE)**
Erfinder: **Wildvang, Bernhard, Dipl.-Ing.
Farger Feld 33
D-2820 Bremen-Farge (DE)**

(74) Vertreter: **Goddar, Heinz J., Dr.
FORRESTER & BOEHMERT Widenmayerstrasse
4/I
D-8000 München 22 (DE)**

## Beschreibung

Die Erfindung betrifft ein Verfahren zum Reduzieren der Schadstoffemission von Feuerungsanlagen nach dem Oberbegriff des Patentanspruchs 1 und eine Vorrichtung zu seiner Durchführung nach dem Oberbegriff des Patentanspruchs 4.

Es ist bereits bekannt, den $NO_x$-Gehalt von Feuerungsanlagen, insbesondere Feuerungsanlagen, dadurch zu senken, daß bei ca. 800°C dem Brennkammerende von Strahlungskesseln mit Kohlefeuerung gasförmiges $NH_3$ zugeführt wird. Dabei tritt zwar die gewünschte $NO_x$-Verringerung ein, versucht man jedoch, den $NO_x$-Gehalt soweit abzusenken, wie dies an sich gewünscht bzw. erforderlich wäre, so tritt ein erheblicher Schlupf von $NH_3$ auf. Ferner wird dabei der $SO_2$-Gehalt der Abgase nicht im gewünschten Maße beeinflußt, d. h. verringert.

Aus der US-A-4 335 084 ist bereits ein Verfahren und eine Vorrichtung der eingangs genannten Art bekannt, bei der das Ammoniak in gasförmiger $NH_3$-Form dem Brenngasgemisch unmittelbar vor der Beendigung des Verbrennungsvorganges zugeführt wird, wobei diese Zuführung jedoch immer an einer festen Stelle erfolgt. Hierdurch läßt sich eine gewiße Reduzierung des $NO_x$-Gehaltes der Abgase erreichen, jedoch ist es bei einer derartigen Vorgehensweise nicht möglich, den $NO_x$- und den $SO_2$-Gehalt der Abgase unter Vermeidung von $NH_3$-Schlupf soweit zu reduzieren, wie dies an sich wünschenswert wäre.

Der Erfindung liegt daher die Aufgabe zugrunde, das Verfahren und die Vorrichtung der eingangs genannten Art dahingehend weiterzubilden, daß der $NO_x$- und $SO_2$-Gehalt der Abgase weiter reduziert werden kann.

Erfindungsgemäß wird diese Aufgabe durch die im Kennzeichen der Patentansprüche 1 bzw. 4 genannten Merkmale gelöst.

Besonders bevorzugte Ausführungsformen des Verfahrens nach der Erfindung sind Gegenstand der Patentansprüche 2 und 3.

Der Erfindung liegt die Erkenntnis zugrunde, daß eine zuverlässige Reduzierung von $NO_x$ und $SO_2$ im Abgas bis weit unter die derzeit gesetzlich geforderten Emissionswerte erzielt werden kann, wenn in der beanspruchten Weise das flüssige $NH_4OH$ oder das gasförmige $NH_3$ nicht an einer festliegenden Position in die Brenngas/Abgasführung eingeführt wird, sondern mittels einer wassergekühlten bzw. wärmeisolierten Sonde in das Flammrohr bzw., je nach Flammrohrbelastung in eine der Wendekammern eines Dreizugkessels eingedüst wird, deren Position über den Lastbereich des Kessels innerhalb des gewünschten "Temperaturfensters" mittels einer Temperaturmeßeinrichtung variiert werden kann. Die Sonde kann bei hoher Feuerraumwärmebelastung beispielsweise eines Dreizugkessels in der vorderen Wendekammer angeordnet werden. Die Einführsonde ist je nach Kesselgröße mit einer oder mehreren Einführdüsen ausgerüstet, wobei über eine kessellastabhängige Regelung die $NH_4OH$- bzw. $NH_3$-Mengen im gewünschten Verhältnis geregelt werden.

Die Abgase weisen praktisch kein freies $NH_3$ mehr auf, d. h. also, $NH_3$-Schlupf wird vermieden. Das entstehende Ammoniumsulfat wird zum größten Teil gasförmig mit den Abgasen abgeführt; ein sehr geringer Anteil desselben kann auch über Staubabscheider abgeschieden werden. Der gewünschte $SO_2$-Gehalt der Abgase bzw. die Zusammensetzung der entstehenden Ammoniumverbindungen werden über das jeweils zweckmäßigste Molverhältnis ($NH_3$ zu NO bzw. $SO_2$) gesteuert. Das erfindungsgemäße Verfahren läßt sich nicht nur bei Dreizugkesseln, sondern auch bei anderen Kesselbauarten, wie z. B. Strahlungskesseln, sowie bei allen fossilen Brennstoffen (beispielsweise Schweröl, Leichtöl, Gas, Kohle) für die zuverlässige Reduktion von $NO_x$- bzw. $NO_x$- und $SO_2$-Emissionen im Abgas einsetzen.

Nachstehend ist ein Ausführungsbeispiel der Erfindung anhand der schematischen Zeichnung im einzelnen erläutert. Dabei zeigt:

Fig. 1 einen Dreizugkessel, teilweise geschnitten, in der Seitenansicht; und

Fig. 2 einen Strahlungskessel im Schnitt.

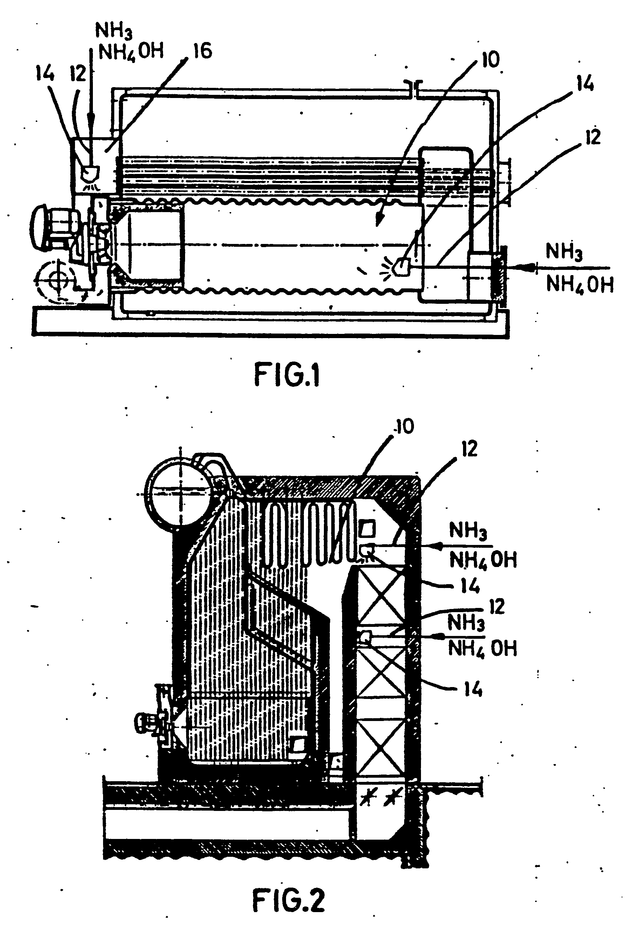

Wie die Zeichnung erkennen läßt, weist die erfindungsgemäße Vorrichtung sowohl im Fall des Dreizugskessels von Fig. 1 als auch im Fall des Strahlungskessels von Fig. 2 jeweils mehrere in einem Feuerraum 10 angeordnete Einführsonden 12 auf, die einerseits mit Temperaturmeßeinrichtungen (nicht gezeigt) und andererseits mit Einführdüsen 14 zum Eindüsen von gasförmigen $NH_3$ bzw. flüssigem $NH_4OH$ in das Brenngasgemisch, dessen Verbrennung noch nicht abgeschlossen ist, versehen sind. Fig. 1 läßt insbesondere erkennen, daß dort die links gezeigte Einführsonde 12 mit Einführdüsen 14 in einer vorderen Wendekammer 16 angeordnet ist.

Dadurch, daß die Position der Einführsonden 12 kessellastabhängig variierbar ist, läßt sich das Ammoniak jeweils an einer Position in das Brenngasgemisch einführen, die die Einhaltung des für eine optimale Schadstoffreduzierung erforderlichen "Temperaturfensters" ermöglicht.

## Patentansprüche

1. Verfahren zum Reduzieren der Schadstoffemission von Feuerungsanlagen, bei dem der $NO_x$-Gehalt der Abgase durch Zuführung von Ammoniak in flüssiger $NH_4OH$- oder gasförmiger $NH_3$-Form in die Brenngas/Abgasführung in einen Bereich unmittelbar vor Beendigung des Brennvorgangs vermindert wird, gekennzeichnet durch Variieren der Einführposition des Ammoniaks zum Optimieren der Einführtemperatur über den Lastbereich des Kessels.

2. Verfahren nach Anspruch 1, gekennzeichnet durch kessellastabhängiges Regeln der Menge des zugeführten Ammoniaks.

3. Verfahren nach Anspruch 2, gekennzeichnet durch Steuern der Menge des zugeführten Ammoniaks hinsichtlich des Molverhältnisses von NH₃ zu NO und/oder SO₂ zum Einstellen eines gewünschten SO₂-Gehaltes des Abgases bzw. der entstehenden Ammoniakverbindungen.

4. Vorrichtung zur Durchführung des Verfahrens nach einem der vorangehenden Ansprüche, mit einer Einrichtung zum Einführen von Ammoniak in die Brenngas/Abgasführung, gekennzeichnet durch wenigstens eine in Abhängigkeit von der Kessellast bewegbare und mit einer Temperaturmeßeinrichtung versehene Einführsonde (12) mit wenigstens einer Einführdüse (14) zum Einführen des Ammoniaks in den Feuerraum (10).

**Revendications**

1. Procédé pour réduire l'émission de produits nocifs d'installations de combustion, dans lequel la teneur en NO$_x$ des gaz brûlés est abaissée par introduction d'ammoniac sous forme de NH₄OH liquide ou de NH₃ gazeux dans les conduits de gaz de combustion et de gaz brûlés, dans une zone située immédiatement avant la fin du processus de combustion, caractérisé en ce qu'on fait varier l'emplacement d'introduction de l'ammoniac pour optimiser la température d'introduction dans le domaine des charges de la chaudière.

2. Procédé selon la revendication 1, caractérisé en ce qu'on règle la quantité d'ammoniac introduite en fonction de la charge de la chaudière.

3. Procédé selon la revendication 2, caractérisé en ce qu-on commande la quantité d'ammoniac introduite en se référant au rapport molaire de NH₃ à NO et/ou SO₂ pour régler une teneur désirée en SO₂ des gaz brûlés ou des composés d'ammoniac formés.

4. Dispositif pour la mise en oeuvre du procédé selon l'une des revendications précédentes, comportant un appareil pour l'introduction d'ammoniac dans les conduits de gaz de combustion et de gaz brûlés, caractérisé par au moins une sonde d'introduction (12) déplaçable en fonction de la charge de la chaudière et munie d'un appareil de mesure de température, cette sonde comportant au moins une buse d'introduction (14) pour l'introduction de l'ammoniac dans la chambre de combustion (10).

**Claims**

1. A method of reducing the emission of noxious substances from furnace plants, in which the NO$_x$-content of the waste gases is reduced by a supply of ammonia in liquid NH₄OH- or gaseous NH₃-form into the combustion gas/waste gas path in a zone immediately before completion of the combustion process, characterised by variation of the introduction position of the ammonia in order to optimise the introduction temperature over the boiler load range.

2. A method according to claim 1, characterised by boiler load dependent control of the quantity of ammonia supplied.

3. A method according to claim 2, characterised by controlling the quantity of ammonia supplied in respect of the molar ratio of NH₃ to NO and/or SO₂ in order to set a required SO₂ content of the waste gas or the resulting ammonia compound.

4. Apparatus for performing the method according to any one of the preceding claims, comprising means for introducing ammonia into the combustion gas/waste gas path, characterised by at least one introduction probe (12) which is movable in dependence on the boiler load, is provided with a temperature measuring means and has at least one introduction nozzle (14) for introducing the ammonia into the combustion chamber (10).

FIG.1

FIG.2

1